# EUROPÄISCHE PATENTSCHRIFT

(11) **EP 3 186 880 B1**
(45) Veröffentlichungstag und Bekanntmachung des Hinweises auf die Patenterteilung: **29.07.2020**
(21) Anmeldenummer: 15750784.9
(22) Anmeldetag: 19.08.2015
(51) Int. Cl.: H02P 6/14, H02P 6/24

(54) **VERFAHREN ZUM ANHALTEN EINES VERDICHTERS UND VERDICHTER EINES KÄLTEGERÄTES**
METHOD FOR STOPPING A COMPRESSOR AND COMPRESSOR OF A REFRIGERATION DEVICE
PROCÉDÉ POUR ARRÊTER UN COMPRESSEUR ET COMPRESSEUR POUR APPAREIL DE FROID

(30) Priorität: 26.08.2014 DE 102014217006
(43) Veröffentlichungstag der Anmeldung: 05.07.2017
(73) Patentinhaber: BSH Hausgeräte GmbH, 81739 München (DE)
(72) Erfinder: BECKMANN, Tommy, 78591 Durchhausen (DE); BRAUN, Volker, 89567 Sontheim an der Brenz (DE); PAULDURO, Achim, 89129 Albeck (DE); RAU, Sebastian, 73495 Stödtlen (DE)
(86) Internationale Anmeldenummer: PCT/EP2015/069055
(87) Internationale Veröffentlichungsnummer: WO 2016/030253

(56) Entgegenhaltungen:
- DE-A1-102007 042 318
- DE-A1-102010 030 239
- JP-A- 2006 174 644

## Beschreibung

Die vorliegende Erfindung betrifft ein Verfahren zum Anhalten eines Verdichters und einen Verdichter eines Kältegerätes, insbesondere eines Haushaltskältegerätes.

Bürstenlose Motoren, insbesondere Permanentmagnet-Synchronmotoren, PMSM (permanent-magnet synchronous motor), und Bürstenlose Gleichstrommotoren, BLDC-Motoren (brushless direct current motor), werden beispielsweise als Kompressorantrieb in Kühlschränken verwendet. Solche Elektromotoren weisen Wicklungen und einen Rotor auf, der einen Permanentmagneten umfasst. Werden die Wicklungen von Strom durchflossen, so erzeugen sie ein Magnetfeld welches auf den Permanentmagneten ein Drehmoment ausübt und somit den Rotor in Bewegung versetzt. Durch abwechselndes Ansteuern der verschiedenen Wicklungen im Motor wird ein drehendes Magnetfeld erzeugt, welches somit den Rotor antreibt.

Ein Verdichter für Haushaltskältegeräte weist häufig einen BLDC Motor mit einem Rotor und einem Stator auf. Der Motor hat einen zum Stator fest positionierten Verdichterzylinder, in dem ein Verdichterkolben bewegbar ist, welcher über Pleuel von einer Welle des Rotors verbunden ist, sowie eine Steuerung zum Ansteuern BLDC Motors. Der Verdichter verdichtet ein Kältemittel und fördert es in einen Leitungsabschnitt zu einem Verflüssiger. In einer Betriebsphase des Verdichters baut sich üblicherweise ein zunehmender Druck auf, gegen den der Verdichterkolben arbeitet.

Die Druckschriften DE 10 2010 030 239 A1, DE 40 09 258 C2 und DE 600 25 909 T2 offenbaren Vorrichtungen und Verfahren zum Anlassen eines bürstenlosen Gleichstrommotors. Kompressorantriebe in Kühlschränken haben ein ungleichmäßiges Lastprofil, was bedeutet, dass die von ihnen angetriebene Last über eine vollständige Umdrehung des Motors variiert, wobei das maximale vom Motor aufzubringende Drehmoment ein Vielfaches des durchschnittlichen Drehmoments betragen kann. Beim Anlassen des Motors ist es daher vorteilhaft, den Rotor zunächst in eine klar definierte Position zu bringen, damit der Rotor bereits einen möglichst großen Drehwinkel zurückgelegt hat und auf eine möglichst große Drehzahl beschleunigt wurde, bevor das maximale Gegen-Moment auftritt. Dies ist die Intention der vorstehenden Druckschriften. Eine Steuerung der Rotorposition in einer Stehphase des Motors wird nicht angesprochen.

Der maximale Druck im Zylinder wird im oberen Totpunkt des Kolbens erreicht. Zwischen Verdichter und Verflüssiger ist am Verdichterausgang ein Rückschlagventil angeordnet. Das Rückschlagventil verhindert einen Rückstrom des bereits in den Leitungsabschnitt zum Verflüssiger geförderten Kältemittels in den Verdichter. In einer Betriebsphase ermöglicht das Rückschlagventil somit ein erneutes Ansaugen von Kältemittel in einer folgenden Umdrehung der Welle des Rotors. In einer Ruhephase des Verdichters verhindert das Rückschlagventil einen Abbau des Drucks im Verflüssiger über den Verdichter, nämlich über einen Spalt zwischen Zylinder und Kolben. Das Rückschlagventil am Verdichterausgang ist häufig von der Bauart eines Lamellenventils und kann eine Vorspannung in Schliessrichtung aufweisen.

Es kommt nun vor, dass beim Anhalten des Verdichters der Kolben nahe seinem oberen Totpunkt stehen bleibt und auf beiden Seiten des Rückschlagventils praktisch der gleiche Druck herrscht, jedenfalls eine Druckdifferenz zu gering ist, um das Rückschlagventil gegen Reibungskräfte zu schließen. Dies kann in der Stehphase des Verdichters zu einem Druckabbau im Verflüssiger über den Verdichter führen und die Energieeffizienz des Kältegeräts verschlechtern.

Die Aufgabe der vorliegenden Erfindung ist es, ein Verfahren sowie eine Vorrichtung zum Anhalten eines Verdichters, zu schaffen, wobei das oben beschriebene Problem möglichst vermieden wird.

Die Erfindung ist in den unabhängigen Ansprüchen definiert.

Gemäß einer Ausgestaltung der vorliegenden Erfindung umfasst ein Verfahren zum Anhalten eines Verdichters, eines Kältegerätes, wobei der Verdichter einen Motor, einen Verdichterzylinder, in dem ein Verdichterkolben läuft, der über einen Pleuel von einer Welle eines Rotors des Motors angetrieben wird, aufweist, die Verfahrensschritte
a) Abbremsen des sich in einer ersten Drehrichtung drehenden BLDC Motors bis zum Stillstand;
b) Positionieren des Motors in einer zweiten Drehrichtung mit einem vorgegebenen Drehmoment; und
c) Beenden des Positionierens.

Gemäß einer Ausgestaltung der vorliegenden Erfindung umfasst ein Verdichter eines Kältegerätes einen Motor und eine Steuerung zum Anhalten des Motors, wobei der Motor einen Rotor und einen Stator, einen zum Stator fest positionierten Verdichterzylinder, in dem ein Verdichterkolben bewegbar ist, welcher über einen Pleuel mit einer Welle des Rotors verbunden ist, sowie eine Steuerung zum Ansteuern des Motors aufweist, wobei die Steuerung eingerichtet ist, den sich in einer ersten Drehrichtung drehenden Motor bis zum Stillstand abzubremsen, anschließend den Rotor in einer zweiten Drehrichtung mit einem vorgegebenen Drehmoment relativ zum Stator zu positionieren.

Mit einer derartigen Positionierung des Motors bzw. des Rotors des Motors kann ein Rückschlagventil am Verdichterausgang sicher schließen. In der Stehphase des Verdichters wird ein Druckabbau im Verflüssiger über den Verdichter verhindert.

Nun folgen weitere vorteilhafte Ausgestaltungen der Erfindung. In einer bevorzugten Anwendung in einem Kältegerät, insbesondere einem Haushalts-Kältegerät, erfährt der Motor ein über einen Drehwinkel der Welle ungleichmäßig verteiltes lastabhängiges Drehmoment mit einem maximalen Drehmoment nahe einem oberen Totpunkt (OT) des Verdichterkolbens.

Die zweite Drehrichtung kann gleich oder entgegen der ersten Drehrichtung gerichtet sein. Vorteilhaft ist die zweite Drehrichtung entgegen der ersten Drehrichtung gerichtet. In dem Fall eines Stopps des Kolbens kurz vor dem OT bringen Gasdruck plus Rückwärtsbestromung den Kolben von dem OT weg. Bei einem Stopp des Kolbens nach dem OT treiben Gasdruck und Schwung den Kolben weit genug von dem OT fort, so dass das Rückschlagventil schließt.

Vorzugsweise ist der Motor ein sensorloser BLDC Motor, der angesteuert wird, indem die Steuerung Schalter eines Wechselrichters schaltet, welche Wicklungen des BLDC Motors mit einer Spannungsquelle verbinden. Die Steuerung kann einen Beobachter aufweisen, mittels dem sie einen Phasenwinkel zwischen einer in einer Wicklung induzierten Spannung und einer auf diese Wicklung geschalteten Spannung beobachtet. Die Steuerung kann die Phasenlage der auf eine Wicklung geschalteten Spannung verändern und so den Motor beschleunigen.

Ein sensorloser BLDC Motor lässt sich durch geeignete Bestromung schrittweise drehen und ermöglicht eine definierte Positionierung des Rotors. Dazu wird mit einem vorgegebenen Drehmoment gedreht, wobei mittels Bestromung des Stators ein drehendes Magnetfeld erzeugt wird, welches den mit Permanentmagneten bestückten Rotor mitnimmt. Das vorgegebene Drehmoment wird kleiner als das zu erwartende maximale Drehmoment gewählt, so dass der Rotor bei der nächsten Bewegung auf den OT zu gegen einen sich aufbauenden Gasdruck läuft und dann hinreichend weit vor dem OT stehen bleibt, während sich das Magnetfeld des Stators weiter dreht.

Diese Position ist insbesondere wenn die zweite Drehrichtung entgegen der ersten Drehrichtung gerichtet ist für einen späteren Anlauf günstig.

Vorteilhaft wird das vorgegebene Drehmoment durch einen in einem Speicher hinterlegten Wert zum Ansteuern des Wechselrichters und/oder der Spannungsquelle erzeugt. Das vorgegebene Drehmoment kann aus den üblichen erwartbaren Betriebsbedingungen des Kältegeräts bestimmt und bei der Herstellung des Verdichters oder des Kältegeräts in einem Speicher abgelegt werden. Der Motor kann in einem Spannungsmodus oder einem Strommodus betrieben werden. Das Drehmoment kann entsprechend durch verschiedenartige physikalische Größen wie etwa dem Strom repräsentiert werden. Die Skalierung ergibt dabei aus dem Kontext der Ansteuerung.

Alternativ dazu kann das vorgegebene Drehmoment oder diesem Drehmoment entsprechende Steuergrößen aus einem vor oder während Verfahrensschritt a) ermittelten Drehmoment beziehungsweise dem Drehmoment entsprechenden Messgrößen abgeleitet werden.

Vorteilhaft umfasst das Positionieren ein schrittweises Ansteuern zum Drehen des BLDC Motors. Zunächst erfolgt ein schrittweises Drehen des Motors. Der Rotor wird zu Beginn des Positionierens von dem sich schrittweise drehenden Magnetfeld mitgenommen. Wenn der Rotor zum Stehen kommt wird das schrittweise Ansteuern zum Drehen des BLDC Motors fortgesetzt, das Magnetfeld dreht sich weiter, vermag aber wegen des geringen Drehmoments den Rotor nicht mehr mitzunehmen.

Vorzugsweise umfasst das Positionieren ein schrittweises Ansteuern zum Drehen des Motors um eine Anzahl Schritte, die mindestens gleich derjenigen Anzahl Schritte ist, die einer Umdrehung des Motors in lastfreiem Zustand entsprechen. Dies bringt den Rotor in eine definierte Position, die im Falle der vorteilhaften Bewegung in Rückwärtsrichtung weit genug von dem OT entfernt ist.

Der Rotor kann mit einem pulsweitenmodulierten Signal, insbesondere mit einem pulsweitenmodulierten Spannungssignal angetrieben werden. Dabei kann mit einem Dutycycle und/oder einem Takt des pulsweitenmodulierten Signals ein Drehmoment ausgewählt werden.

Ein erfindungsgemäßes Kältegerät mit einem wie oben beschrieben ausgestalteten Verdichter ist besonders energieeffizient betreibbar. Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Weitere Merkmale und Vorteile der Erfindung ergeben sich aus der nachfolgenden Beschreibung von Ausführungsbeispielen unter Bezugnahme auf die beigefügten Figuren. Dabei zeigen
- Fig. 1: ein Ersatzschaltbild eines Elektromotors, welcher als bürstenloser Gleichstrommotor bzw. BLDC-Motor ausgebildet ist, eines erfindungsgemäßen Verdichters,
- Fig. 2: eine schematische Darstellung eines von einer Welle angetriebenen Kolbens in einem Zylinder in unterschiedlichen Positionen bei einem erfindungsgemäßen Verdichter, und
- Fig. 3: ein Flussdiagramm eines erfindungsgemäßen Verfahrens.

Falls nichts anderes angegeben ist, bezeichnen gleiche Bezugszeichen in den Figuren gleiche oder funktionsgleiche Elemente.

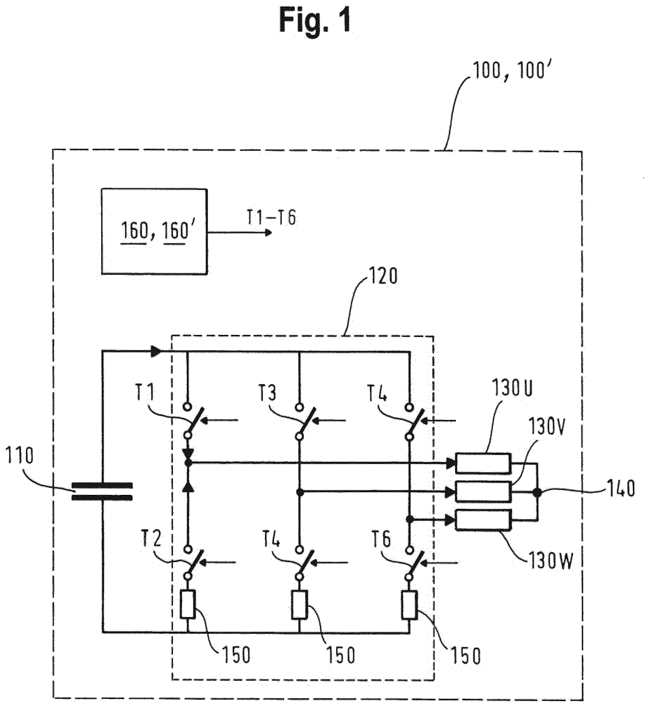

Fig. 1 zeigt ein Ersatzschaltbild eines Motors 100, hier eines bürstenlosen Elektromotors 100', welcher als ein PMSM oder ein sensorloser BLDC Motor ausgebildet ist, und beispielsweise als Kompressorantrieb in einem Kühlschrank verwendet werden kann. Der bürstenlose Elektromotor 100' weist eine Spannungsquelle 110, eines Wechselrichters 120, drei Motorwicklungen bzw. Wicklungen 130U, 130V, 130W und eine Motorsteuerung 160 auf.

Die Spannungsquelle 110 stellt eine Zwischenkreisspannung zwischen einem Zwischenkreisversorgungspotential und einer Zwischenkreismasse bereit. Der Wechselrichter 120 weist sechs Schalter T1 bis T6 auf, welche in Form einer B6-Brücke angeordnet sind und die Wicklungen 130U, 130V und 130W mit Strom versorgen. Genauer sind jeweils zwei Schalter T1 und T2, T3 und T4 bzw. T5 und T6 in Reihe zwischen dem Zwischenkreisversorgungspotential und der Zwischenkreismasse angeschlossen. Die Knoten zwischen den Schaltern T1 und T2, T3 und T4 bzw. T5 und T6 sind jeweils mit einer Seite der Wicklungen 130U, 130V und 130W verbunden. An ihrer anderen Seite sind die Wicklungen 130U, 130V und 130W mit einem Sternpunkt 140 verbunden. Ferner sind jeweils zwischen den Schaltern T2, T4 sowie T6 und der Zwischenkreismasse Shunt-Widerstände 150 vorgesehen.

Die Schalter T1 bis T6 können beispielsweise jeweils einen Leistungstransistor und eine dazu parallel geschaltete Freilaufdiode umfassen. Die Schalter T1 bis T6 werden mittels Steuersignalen X1 bis X6 angesteuert, die von einer Steuerung 160, der Motorsteuerung 160' bereitgestellt werden. Die Motorsteuerung 160' entspricht dabei einer Vorrichtung zum Steuern eines Elektromotors. Dabei werden die Wicklungen 130 derart angesteuert, dass ein rotierendes Magnetfeld erzeugt wird, in welchem ein einen Permanentmagneten umfassender Rotor rotiert. Der bürstenlose Elektromotor 100' ist also ein Permanentmagnet-Synchronmotor mit drei Wicklungen 130, der mittels des B6-Wechselrichters 120 mit einer dreiphasigen Spannung gespeist wird.

Im Verdichterbetrieb läuft der Rotor auf den OT zu gegen einen sich aufbauenden Gasdruck, welcher ein Gegendrehmoment zum Antriebsdrehmoment des Motors erzeugt und mittels dem Antriebsdrehmoment und dem Schwung des Motors überwunden werden muss. Das Antriebsdrehmoment ist einerseits durch Bestromung erzeugbar und andererseits durch Messung von induzierten Spannungen messbar.

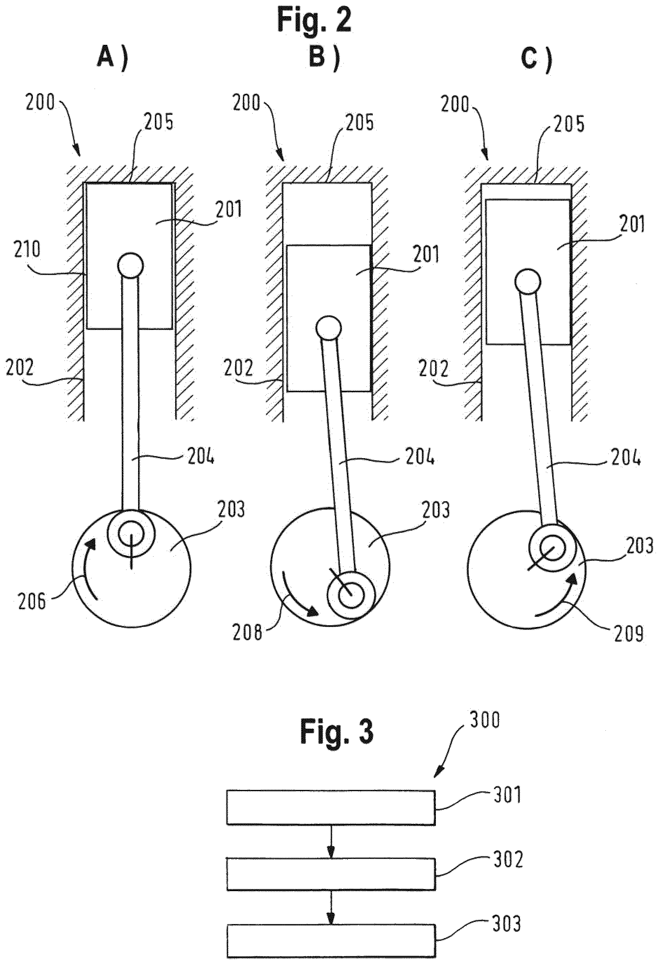

Fig. 2 zeigt in einer schematischen Darstellung eine Verdichtermechanik 200 eines Kältegeräts in verschiedenen Arbeitspositionen A), B) und C). Die Verdichtermechanik 200 weist einen Kolben 201 auf, der in einem Zylinder 202 hin und her bewegbar ist. Die Verdichtermechanik weist eine Welle 203 auf. Ein Pleuel 204 bildet mit der Welle 203 eine Kurbel und ist an seinem freien Ende mit dem Kolben 201 verbunden. Ein in einer Stirnwand 205 des Zylinders 202 angeordneter Gaseinlass sowie Gasauslass mit Rückschlagventil sind nicht dargestellt.

Die Welle 203 ist die Welle des aus Fig. 1 bekannten Elektromotors. Die Drehrichtung 206 im Verdichterbetrieb ist durch einen Pfeil dargestellt. Der Verdichter des Kältegerätes umfasst somit den Motor 100, hier den bürstenlosen Elektromotor 100' und die Steuerung 160, hier die Motorsteuerung 160', zum Anhalten des Motors 100, wobei der Motor 100 einen Rotor und einen Stator aufweist. Der Verdichterzylinder, Zylinder 202 ist zum Stator fest positioniert. Der Kolben 201 ist in dem Zylinder 202 bewegbar uns über den Pleuel 204 mit der Welle 203 des Rotors verbunden. Eine Steuerung 160, nämlich die Motorsteuerung 160', zum Ansteuern des Motors ist eingerichtet, den sich in einer ersten Drehrichtung 206 drehenden Motor 160 bis zum Stillstand abzubremsen, anschließend den Rotor in einer zweiten Drehrichtung 208, 209 (Pfeile) mit einem vorgegebenen Drehmoment relativ zum Stator zu positionieren.

Fig. 3 zeigt ein Flussdiagramm 300 eines erfindungsgemäßen Verfahrens zum Anhalten eines Verdichters eines Kältegerätes. Es wird Bezug genommen auf den aus Fig. 1 bekannten Motor und auf die aus Fig. 2 bekannte Verdichtermechanik. Der Verdichter weist einen Motor wie den Elektromotor 100, einen Verdichterzylinder, in dem ein Verdichterkolben bewegbar ist, der über einen Pleuel von einer Welle eines Rotors des Motors angetrieben wird, sowie eine Steuerung zum Ansteuern des Motors auf.

Das Verfahren beginnt mit Verfahrensschritt a) Abbremsen 301 des sich in einer ersten Drehrichtung 206 drehenden Motors 100 bis zum Stillstand. Fig. 2 A) zeigt die Arbeitsposition, in der der Kolben 201 nach dem Abbremsen aus dem Verdichterbetrieb in Drehrichtung 206 zufälligerweise und ungünstigerweise im OT zum Stehen gekommen ist.

Nun erfolgt mit Schritt b) ein Positionieren 302 des Motors 100 in einer zweiten Drehrichtung 208 mit einem vorgegebenen Drehmoment. Fig. 2 B) zeigt eine intermediäre Arbeitsposition, in der der Kolben 201 über den unteren Totpunkt (UT) hinweg bewegt worden ist, während die das Positionieren fortschreitet. Dazu wird der Motor schrittweise mit einem vorgegebenen Drehmoment gedreht, wobei mittels Bestromung des Stators ein drehendes Magnetfeld erzeugt wird, welches den mit Permanentmagneten bestückten Rotor mitnimmt.

Das vorgegebene Drehmoment ist kleiner als das zu maximale Drehmoment gewählt, so dass der Rotor bei der Bewegung auf den OT zu gegen einen sich aufbauenden Gasdruck gelaufen ist und dann hinreichend weit vor dem OT stehen geblieben ist, während sich das Magnetfeld des Stators weiter gedreht hat bis zum Beenden des Positionierens. Fig. 2 C) zeigt eine finale Arbeitsposition, in der der Kolben 201 nach Ende des Positionierens deutlich vor dem OT zum Stehen gekommen ist.

Schließlich wird mit Schritt c) das Positionieren beendet (303). Nun ist das drehende Stator-Magnetfeld abgeschaltet und der Kolben 201 ist weiterhin in der in Fig. 2 C) gezeigten finalen Position, in der gesteuert positioniert worden ist.

Mit einer derartigen Positionierung des Motors bzw. des Rotors des Motors kann ein Rückschlagventil am Verdichterausgang sicher schließen. In der Stehphase des Verdichters wird ein Druckabbau im Verflüssiger über den Verdichter, nämlich in Fig. 2 über einen Spalt 210 zwischen Kolben 201 und Zylinder 202, verhindert.

Nun wird auf vorteilhafte Ausführungsformen der Erfindung hingewiesen. Im Beispiel ist die zweite Drehrichtung 208, 209 entgegen der ersten Drehrichtung 206 gerichtet.

Der Motor 100 ist ein PMSM oder ein sensorloser BLDC Motor, der angesteuert wird, indem die Steuerung 160 Schalter T1 ... T6 eines Wechselrichters 120 schaltet, wobei die Schalter T1 ... T6 Wicklungen, Wicklungen 130U, 130V, 130W, des PMSM oder des BLDC Motors mit einer Spannungsquelle 110 verbinden. Das vorgegebene Drehmoment kann durch einen in einem Speicher hinterlegten Wert zum Ansteuern des Wechselrichters 120 und/oder der Spannungsquelle 110 erzeugt werden. Das vorgegebene Drehmoment kann aus den üblichen erwartbaren Betriebsbedingungen des Kältegeräts bestimmt und bei der Herstellung des Verdichters oder des Kältegeräts in einem Speicher abgelegt werden. Der Motor kann in einem Spannungsmodus oder einem Strommodus betrieben werden. Das Drehmoment kann entsprechend durch verschiedenartige physikalische Größen wie etwa Strom oder Spannung repräsentiert werden. Die Skalierung ergibt dabei aus dem Kontext der Ansteuerung.

Alternativ dazu kann das vorgegebene Drehmoment oder diesem Drehmoment entsprechende Steuergrößen aus einem vor oder während Verfahrensschritt a) ermittelten Drehmoment beziehungsweise dem Drehmoment entsprechenden Messgrößen abgeleitet werden.

Ein erfindungsgemäßes Kältegerät mit einem wie oben beschrieben ausgestalteten Verdichter ist besonders energieeffizient betreibbar. Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

### Bezugszeichenliste:

- 100, 100': Motor, Elektromotor
- 110: Spannungsquelle
- 120: Wechselrichter
- 130U, 130V, 130W: Wicklungen
- 140: Sternpunkt
- 150: Widerstand
- 160, 160': Steuerung, Motorsteuerung
- 200: Verdichtermechanik
- 201: Kolben
- 202: Zylinder
- 203: Welle
- 204: Pleuel
- 205: Stirnwand
- 206, 208, 209: Drehrichtung
- 210: Spalt
- 300: Flussdiagramm
- 301: Abbremsen
- 302: Positionieren
- 303: Positionieren beendet
- T1 ... T6: Schalter

## Patentansprüche

1. Verfahren zum Anhalten eines Verdichters eines Kältegerätes, wobei der Verdichter einen Motor (100), einen Zylinder (202), in dem ein Kolben (201) läuft, der über einen Pleuel (204) von einer Welle (203) eines Rotors des Motors angetrieben wird, aufweist, wobei der Motor (100) ein bürstenloser Motor (100') ist, der angesteuert wird, indem eine Steuerung (160) Schalter (T1-T6) eines Wechselrichters (120) schaltet, welche Wicklungen (130U, 130V, 130W) des bürstenlosen Motors (100') mit einer Spannungsquelle (110) verbinden, **gekennzeichnet durch** die Verfahrensschritte
a) Abbremsen (301) des sich in einer ersten Drehrichtung (206) drehenden Motors (100) bis zum Stillstand;
b) Positionieren (302) des Motors (100) in einer zweiten Drehrichtung (208, 209) mit einem vorgegebenen Drehmoment, wobei das Positionieren (302) ein schrittweises Drehen des Motors (100) um eine Anzahl Schritte umfasst;
c) Beenden (303) des Positionierens.

2. Verfahren nach Anspruch 1, **dadurch gekennzeichnet, dass** die zweite Drehrichtung (208, 209) entgegen der ersten Drehrichtung (206) gerichtet ist.

3. Verfahren nach Anspruch 1 oder 2, **dadurch gekennzeichnet, dass** der Motor (100) ein PMSM oder ein sensorloser BLDC Motor ist.

4. Verfahren nach Anspruch 3, **dadurch gekennzeichnet, dass** das vorgegebene Drehmoment durch einen in einem Speicher hinterlegten Wert zum Ansteuern des Wechselrichters (120) und/oder der Spannungsquelle (110) erzeugt wird.

5. Verfahren nach Anspruch 3 oder 4, **dadurch gekennzeichnet, dass** das vorgegebene Drehmoment oder diesem Drehmoment entsprechende Steuergrößen aus einem vor oder während Verfahrensschritt a) ermittelten Drehmoment beziehungsweise dem Drehmoment entsprechende Messgrößen abgeleitet wird.

6. Verfahren nach einem der Ansprüche 3 bis 5, **dadurch gekennzeichnet, dass** das Positionieren (302) ein schrittweises Ansteuern zum Drehen des Motors (100) umfasst.

7. Verfahren nach Anspruch 6, **dadurch gekennzeichnet, dass** das Positionieren ein schrittweises Ansteuern zum Drehen des Motors (100) um eine Anzahl Schritte umfasst, die mindestens gleich derjenigen Anzahl Schritte ist, die einer Umdrehung des Motors in lastfreiem Zustand entsprechen.

8. Verdichter eines Kältegerätes mit einem Motor (100) und einer Steuerung zum Anhalten des Motors, wobei der Motor (100) einen Rotor und einen Stator, einen zum Stator fest positionierten Zylinder (202), in dem ein Kolben (201) bewegbar ist, welcher über einen Pleuel mit einer Welle des Rotors verbunden ist, sowie eine Steuerung (160) zum Ansteuern des Motors aufweist, wobei der Motor (100) ein bürstenloser Motor (100') ist, wobei die Steuerung (160) zu einer Ansteuerung des bürstenlosen Motors (100') eingerichtet ist, Schalter (T1-T6) eines Wechselrichters (120) zu schalten, wobei die Schalter (T1-T6) Wicklungen (130U, 130V, 130W) des bürstenlosen Motors (100') mit einer Spannungsquelle (110) verbinden, **dadurch gekennzeichnet, dass** die Steuerung (160) eingerichtet ist, den sich in einer ersten Drehrichtung (206) drehenden Motor (100) bis zum Stillstand abzubremsen, anschließend den Rotor in einer zweiten Drehrichtung (208, 209) mit einem vorgegebenen Drehmoment relativ zum Stator zu positionieren, wobei das Positionieren (302) ein schrittweises Drehen des Motors (100) um eine Anzahl Schritte umfasst.

9. Verdichter nach Anspruch 8, **dadurch gekennzeichnet, dass** die zweite Drehrichtung (208, 209) entgegen der ersten Drehrichtung (206) gerichtet ist.

10. Verdichter nach Anspruch 8 oder 9, **dadurch gekennzeichnet, dass** der Motor (100) ein PMSM oder ein sensorloser BLDC Motor ist.

11. Verdichter nach Anspruch 10, **dadurch gekennzeichnet, dass** das vorgegebene Drehmoment durch einen in einem Speicher hinterlegten Wert zum Ansteuern des Wechselrichters (120) und/oder der Spannungsquelle (110) erzeugt wird.

12. Verdichter nach Anspruch 10 oder 11, **dadurch gekennzeichnet, dass** die Steuerung eingerichtet ist, das vorgegebene Drehmoment aus einem ermittelten Drehmoment abzuleiten oder diesem Drehmoment entsprechende Steuergrößen aus dem Drehmoment entsprechenden ermittelten Messgrößen abzuleiten.

13. Kältegerät mit einem Verdichter nach einem der Ansprüche 8 bis 12.

## Claims

1. Method for stopping a compressor of a refrigeration appliance, the compressor having a motor (100), a cylinder (202) in which a piston (201) operates, which is driven by a shaft (203) of a rotor of the motor by way of a rod (204), wherein the motor (100) is a brushless motor (100'), which is activated by a controller (160) switching switches (T1-T6) of an inverter (120), which connect windings (130U, 130V, 130W) of the brushless motor (100') to a voltage source (110),
**characterised by** the method steps
a) slowing down (301) the motor (100) which is rotating in a first rotation direction (206) until it stops;
b) positioning (302) the motor (100) in a second rotation direction (208, 209) with a predefined torque; wherein the positioning (302) comprises incremental rotation of the motor (100) about a number of stages:
c) terminating (303) positioning.

2. Method according to claim 1, **characterised in that** the second rotation direction (208, 209) is oriented counter to the first rotation direction (206).

3. Method according to claim 1 or 2, **characterised in that** the motor (100) is a PMSM or a sensorless BLDC motor.

4. Method according to claim 3, **characterised in that** the predefined torque is generated by a value for activating the inverter (120) and/or the voltage source (110) stored in a storage unit.

5. Method according to claim 3 or 4, **characterised in that** the predefined torque or control variables corresponding to said torque is/are derived from a torque determined before or during method step a) or measured variables corresponding to the torque.

6. Method according to one of claims 3 to 5, **characterised in that** positioning (302) comprises incremental activation to rotate the motor (100).

7. Method according to claim 6, **characterised in that** positioning comprises incremental activation to rotate the motor (100) through a number of stages, which is at least equal to the number of stages corresponding to a revolution of the motor in the load-free state.

8. Compressor of a refrigeration appliance with a motor (100) and a controller for stopping the motor, the motor (100) having a rotor and a stator, a cylinder (202) positioned in a fixed manner in relation to the stator, a piston (201) being able to move therein and being connected to a shaft of the rotor by way of a rod, as well as a controller (160) for activating the motor, wherein the motor (100) is a brushless motor (100'), wherein the controller (160) for activating the brushless motor (100') is designed to switch switches (T1-T6) of an inverter (120), wherein the switches (T1-T6) connect windings (130U, 130V, 130W) of the brushless motor (100') to a voltage source (110), **characterised in that** the controller (160) is designed to slow down the motor (100), which is rotating in a first rotation direction (206), until it stops, then to position the rotor in a second rotation direction (208, 209) in relation to the stator with a predefined torque, wherein the positioning (302) comprises an incremental rotation of the motor (100) about a number of stages.

9. Compressor according to claim 8, **characterised in that** the second rotation direction (208, 209) is oriented counter to the first rotation direction (206).

10. Compressor according to claim 8 or 9, **characterised in that** the motor (100) is a PMSM or a sensorless BLDC motor.

11. Compressor according to claim 10, **characterised in that** the predefined torque is generated by a value for activating the inverter (120) and/or the voltage source (110) stored in a storage unit.

12. Compressor according to claim 10 or 11, **characterised in that** the controller is designed to derive the predefined torque from a determined torque or to derive control variables corresponding to said torque from measured variables corresponding to the torque.

13. Refrigeration appliance with a compressor according to one of claims 8 to 12.

## Revendications

1. Procédé pour l'arrêt d'un compresseur d'un appareil frigorifique, dans lequel le compresseur présente un moteur (100), un cylindre (202), dans lequel circule un piston (201), entraîné via une bielle (204) d'un arbre (203) d'un rotor du moteur, dans lequel le moteur (100) est un moteur sans balais (100'), actionné par le fait qu'une commande (160) couple les commutateurs (T1-T6) d'un onduleur (120), qui relient des bobinages (130U, 130V, 130W) du moteur sans balais (100') à une source de tension (110), **caractérisé par** les étapes de procédé
a) freinage (301) du moteur (100) tournant dans un premier sens de rotation (206) jusqu'à l'arrêt ;
b) positionnement (302) du moteur (100) dans un deuxième sens de rotation (208, 209) avec un couple prescrit, dans lequel le positionnement (302) comprend une rotation par étapes du moteur (100) selon un nombre d'étapes ;
c) fin (303) du positionnement.

2. Procédé selon la revendication 1, **caractérisé en ce que** le deuxième sens de rotation (208, 209) est dirigé à l'encontre du premier sens de rotation (206).

3. Procédé selon la revendication 1 ou 2, **caractérisé en ce que** le moteur (100) est un moteur PMSM ou BLDC sans capteurs.

4. Procédé selon la revendication 3, **caractérisé en ce que** le couple prescrit est généré par une valeur enregistrée dans une mémoire pour l'actionnement de l'onduleur (120) et/ou de la source de tension (110).

5. Procédé selon la revendication 3 ou 4, **caractérisé en ce que** le couple prescrit ou des grandeurs d'actionnement correspondant à ce couple est/sont dérivé(e)s d'un couple établi avant ou pendant l'étape de procédé a) resp. de grandeurs de mesure correspondant au couple.

6. Procédé selon l'une des revendications 3 à 5, **caractérisé en ce que** le positionnement (302) comprend un actionnement par étapes pour la rotation du moteur (100).

7. Procédé selon la revendication 6, **caractérisé en ce que** le positionnement comprend un actionnement par étapes pour la rotation du moteur (100) selon un nombre d'étapes équivalant au moins au nombre d'étapes constituant une rotation du moteur à l'état hors charge.

8. Compresseur d'un appareil frigorifique avec un moteur (100) et une commande pour l'arrêt du moteur, dans lequel le moteur (100) présente un rotor et un stator, un cylindre (202) positionné de manière fixe par rapport au stator, dans lequel un piston (201) peut être déplacé, lequel est relié via une bielle à un arbre du rotor, ainsi qu'une commande (160) pour l'actionnement du moteur, dans lequel le moteur (100) est un moteur sans balais (100'), dans lequel la commande (160) pour un actionnement du moteur sans balais (100') est aménagée afin de coupler les commutateurs (T1-T6) d'un onduleur (120), dans lequel les commutateurs (T1-T6) relient les bobinages (130U, 130V, 130W) du moteur sans balais (100') à une source de tension (110), **caractérisé en ce que** la commande (160) est aménagée afin de freiner le moteur (100) tournant dans un premier sens de rotation (206) jusqu'à l'arrêt, de positionner ensuite le rotor dans un deuxième sens de rotation (208, 209) selon un couple prescrit par rapport au stator, dans lequel le positionnement (302) comprend une rotation par étapes du moteur (100) selon un nombre d'étapes.

9. Compresseur selon la revendication 8, **caractérisé en ce que** le deuxième sens de rotation (208, 209) est dirigé à l'encontre du premier sens de rotation (206).

10. Compresseur selon la revendication 8 ou 9, **caractérisé en ce que** le moteur (100) est un moteur PMSM ou BLDC sans capteurs.

11. Compresseur selon la revendication 10, **caractérisé en ce que** le couple prescrit est généré par une valeur enregistrée dans une mémoire pour l'actionnement de l'onduleur (120) et/ou de la source de tension (110).

12. Compresseur selon la revendication 10 ou 11, **caractérisé en ce que** la commande est aménagée afin de dériver le couple prescrit d'un couple établi ou de dériver des grandeurs de commande correspondant à ce couple au départ des grandeurs de mesure établies correspondant au couple.

13. Appareil frigorifique avec un compresseur selon l'une des revendications 8 à 12.
